# EUROPEAN PATENT SPECIFICATION

(11) **EP 1 421 508 B1**
(45) Date of publication and mention of the grant of the patent: **04.09.2013**
(21) Application number: 02756739.5
(22) Date of filing: 26.07.2002
(51) Int. Cl.: H04L 29/06, G06F 15/16

(54) **MULTIPLE HOST ARRANGEMENT FOR MULTIMEDIA SESSIONS USING SESSION INITIATION PROTOCOL (SIP) COMMUNICATION**
MEHRFACH-HOST-ANORDNUNG FÜR MULTMEDIA-SITZUNGEN MIT KOMMUNIKATION UNTER DEM SITZUNGSEINLEITUNGSPROTOKOLL (SIP)
DISPOSITIF HOTE MULTIPLE DESTINE A DES SESSIONS MULTIMEDIAS UTILISANT UNE COMMUNICATION DE PROTOCOLE D'INITIATION DE SESSION (SIP)

(30) Priority: 27.07.2001 US 308305 P; 25.09.2001 US 962033
(43) Date of publication of application: 26.05.2004
(73) Proprietor: Alcatel Lucent, 75007 Paris (FR)
(72) Inventor: WENGROVITZ, Michael, Concord, MA 01742 (US); NELSON, Andrew, Lynnfield, MA 01940 (US)
(74) Representative: Wetzel, Emmanuelle
(86) International application number: PCT/US2002/023950
(87) International publication number: WO 2003/012669

(56) References cited:
- WO-A-01/41411
- WO-A-01/41416
- US-A- 6 161 134
- US-B1- 6 259 691
- US-B1- 6 366 577
- US-B1- 6 404 746
- US-B1- 6 446 127

## Description

### FIELD OF THE INVENTION

This invention relates generally to Internet telephony communications, and more particularly, to a desktop system in which two or more hosts work together to support multimedia sessions via Internet telephony.

### BACKGROUND OF THE INVENTION

Session Initiation Protocol (SIP) is a signaling protocol for creating, modifying, and terminating multimedia sessions with one or more participants. These sessions include Internet multimedia conferences, Internet telephone calls, and multimedia distributions, presence, and instant messaging. Details about the SIP signaling protocol is set forth in Internet Engineering Task Force Request for Comment 2543 entitled "SIP: Session Initiation Protocol," March 1999 (hereinafter referred to as RFC 2543). SIP provides an alternative to PBX- or H.323-signaled telephony.

Callers and callees participating in a SIP signaled communication are generally SIP hosts identified by SIP URLs. Proposed SIP hosts include multimedia devices that are usually enhancements of legacy single-medium devices.

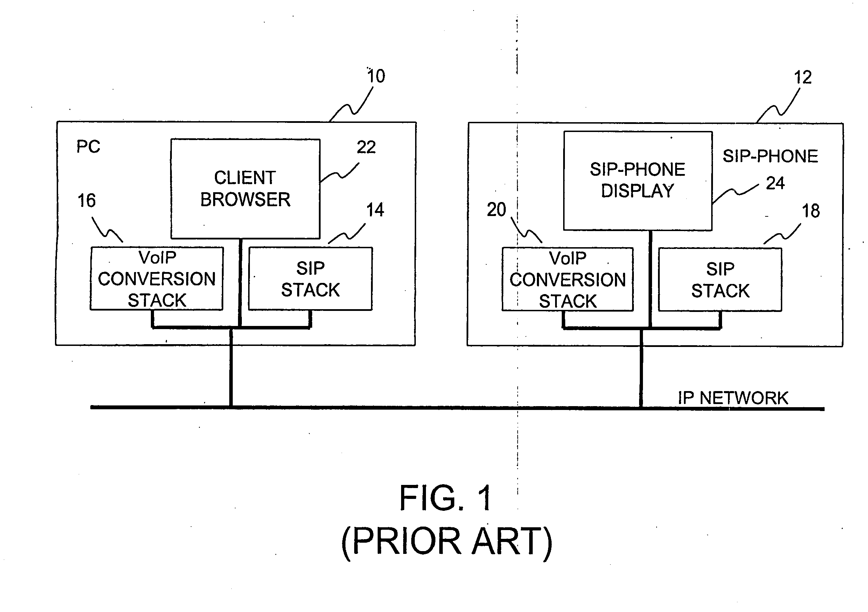

FIG. 1 is a block diagram illustrating two conventional approaches for SIP hosts. One proposed SIP host is a multimedia personal computer (PC) 10 having an SIP signaling stack (also referred to as an SIP user agent) 14 that interworks with a voice-over-IP (VoIP) conversion stack 16 and a browser 22 to deliver voice through PC speakers (not shown) and associated data and/or video through a PC monitor (not shown). For example, the PC may display an image of a caller while simultaneously converting compressed internet protocol (IP) packets to speech. The PC may also display a document or video pertinent to the call.

An anticipated problem with the multimedia PC is that it can be expected to inherit many of the reliability problems of the legacy PC, e.g., frequent crashes. Such reliability problems may compound the frustration experienced by the legacy PC user since the multimedia PC will represent a single multimedia failure point. Another anticipated problem is that the intense CPU processing demands associated with synthesizing real-time voice traffic may result in poor overall performance.

Another proposed SIP host illustrated in FIG. 1 is a multimedia SIP-phone 12 having an SIP stack 18 that interworks with a VoIP conversion stack 20 and a data stack (not shown) to deliver voice through a handset (not shown) and associated data and/or video through an integrated display window 24. An anticipated problem with the multimedia SIP-phone 12 is that it may be costly relative to legacy phones. Another anticipated problem is that the integrated display window 24 may suffer from poor image resolution as well as severe limitations on the number of characters displayed on the screen at one time.

Accordingly, there is a need for a cost effective and efficient desktop system that provides reliable SIP phone connections while providing an improved display of data, video, and/or graphics (collectively referred to as display data).

International Patent Application WO 01/41416 A2 relates to systems and methods for personalizing a data network appliance on a data network telephony system. An appliance customization attribute is provided by a user to a data network appliance, such as a data network telephone. The appliance customization attribute indicates the user's desired configuration for the data network appliance. For example, the user may specify a particular audio clip, such as one that states the user's name, to be played when the data network appliance receives an incoming call for the user. In a preferred embodiment, the appliance customization attribute is stored on a portable information device, such as a PDA (Personal Digital Assistant). When the user wishes to become registered to a particular data network appliance, the user may cause the portable information device to transmit the appliance customization attribute to the data network appliance to personalize the data network appliance.

International Patent Application WO 01/41411 A2 relates to personalized call announcement on a data network telephony system. A user provides a call announcement attribute to a first data network appliance. As part of a call setup operation with a second data network appliance located on a data network, the first data network appliance (also located on the data network) transmits the call announcement attribute to the second data network appliance. The second data network appliance plays a personalized call announcement message corresponding to the call announcement attribute received from the first data network appliance. The personalized call announcement message notifies the called party of the incoming call. In a preferred embodiment of the present invention, the user uses a portable information device to transmit the announcement message attributes to the first data network appliance. An example of a portable information device is a PDA (Personal Digital Assistant), a smart card, or a portable phone.

### SUMMARY OF THE INVENTION

The present invention is directed to a multihost system for communicating information to a SIP multimedia session participant in accordance with claim 1, and a corresponding method claim in accordance with claim 13. Further embodiments of the invention are comprised in the dependent claims 2-12 and 14-24.

### DESCRIPTION OF THE DRAWINGS

These and other features, aspects and advantages of the present invention will be more fully understood when considered with respect to the following detailed description, appended claims, and accompanying drawings where:
FIG. 1 is a block diagram illustrating two conventional approaches for SIP hosts;
FIG. 2 is a schematic block diagram of a system for conducting multimedia SIP sessions via multiple hosts according to one embodiment of the invention;
FIG. 3 is an SIP signaling process for establishing communication with a calling client according to the embodiment illustrated in FIG. 2;
FIG. 4 is an exemplary session description according to one embodiment of the invention;
FIG. 5 is a schematic block diagram of a system including an SIP split user agent proxy server allowing multimedia SIP sessions to be conducted even in the event of a PC crash according to one embodiment of the invention;
FIG. 6 is a functional block diagram of SIP signals received and transmitted by the SIP split user agent proxy server of FIG. 5 in the event that the incoming call is a voice-only call with no associated display data;
FIG. 7 is a functional block diagram of SIP signals received and transmitted by the SIP Split User Agent Proxy server of FIG. 5 in the event that the incoming call contains both voice and non-video display data according to one embodiment of the invention;
FIG. 8 is a functional block diagram of SIP signals received and transmitted by the SIP Split User Agent Proxy server of FIG. 5 in the event that the incoming call contains both voice, non-video display data, and video information according to one embodiment of the invention;
FIG. 9 is one exemplary illustration of the processing of outbound calls containing both voice and non-video display data according to one embodiment of the invention; and
FIG. 10 is a schematic block diagram of a system for conducting multimedia SIP sessions via multiple hosts according to another embodiment of the invention.

### DESCRIPTION OF THE INVENTION

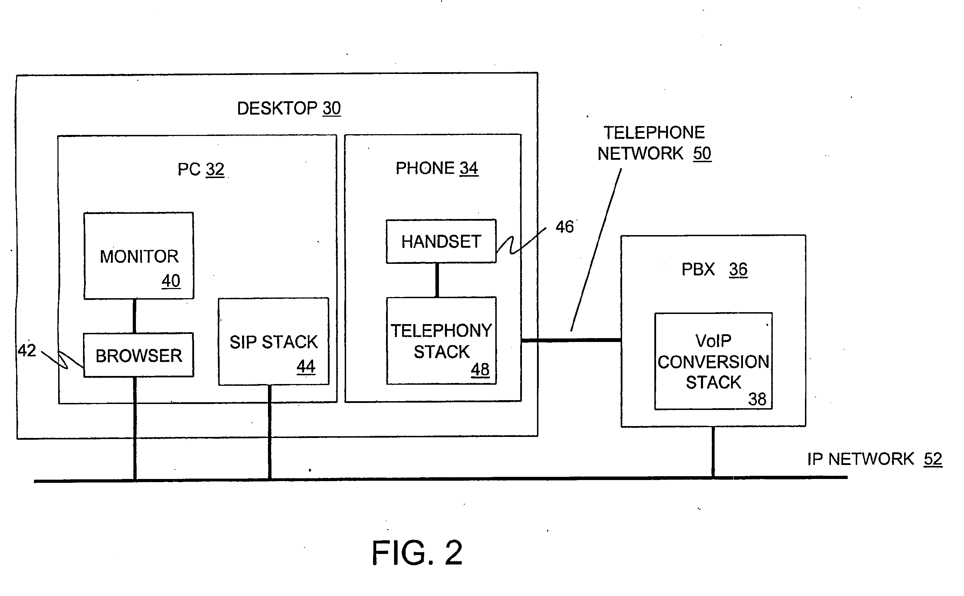

FIG. 2 is a schematic block diagram of a system for conducting multimedia SIP sessions via multiple hosts according to one embodiment of the invention. SIP sessions are also referred to as SIP communications or SIP calls. In the illustrated embodiment, the system includes a desktop 30 that incorporates two hosts: a PC 32 and a telephone 34. The PC 32 is coupled to an internet protocol (IP) network 52 and is preferably responsible for engaging in call signaling to establish an SIP session. The PC is further responsible for displaying display data received during the SIP session. The telephone 34 is coupled to a private branch exchange (PBX) unit 36 over a telephone network 50. The telephone 34 is preferably responsible for relaying to a session participant voice data received during the SIP session.

The PC 32 preferably includes a display monitor 40 coupled to a browser software 42. The display monitor 40 is preferably a VGA or more preferably a SVGA capable LCD-type display having a screen resolution of about 640 x 480 pels. The browser software 42 is preferably a conventional browser software such as, for example, Netscape Navigator™ or Microsoft Explorer™. The browser software 42 may also be replaced with any other form of display software known in the art.

The PC 32 preferably also includes an SIP signaling stack (also referred to as an SIP user agent) 44 that allows for SIP signaled communications over the IP network 52. The SIP signaling stack 44 preferably adheres to the SIP signaling protocol as set forth in RFC 2543, but may also adhere to other signaling protocols known in the art. The IP network 52 is preferably an SIP-observant network supporting SIP-signaled communications to and from the PC 32.

The telephone 34 is preferably a conventional telephone that includes a handset 46 coupled to a telephone protocol stack 48. The handset 46 may include a speaker and a microphone for respectively receiving and transmitting voice data. The telephone protocol stack 48 preferably includes conventional telephone control protocols allowing the making and receiving of telephone calls and other basic telephony functions over the telephone network 50 according to conventional methods.

The PBX unit 36 preferably manages incoming and outgoing calls for a particular location. The PBX unit 36 preferably includes a VoIP conversion stack 38 for media translations, such as, for example, converting compressed IP packets to speech. In an alternative embodiment, the VoIP conversion stack 38 resides within the PC 32 or telephone 34. According to this alternative embodiment, the system may operate with or without the PBX 36. In yet another embodiment, the PBX 36 is replaced with a standard public telephone switch (e.g. a Class 5 switch).

The PC 32 and telephone 34 preferably work together to support multimedia SIP sessions. In general terms, a SIP- signaled telephone call is received by the PC 32 and handed to the SIP signaling stack 44. The SIP signaling stack 44 performs signaling operations for establishing a connection with the calling client.

Once a connection is established, the PBX 36 receives voice IP packets transmitted by the calling client during the course of the call. The PBX 36 invokes the VoIP conversion stack 38 to convert the received voice packets into speech. The converted voice portion of the call is then transmitted to the telephone 34 over the telephone network 50. The telephony stack 48 within the phone 34 receives the converted speech data and provides it to the handset 46 according to conventional methods.

The calling client also preferably transmits display data packets during the course of the call. The display data packets may be associated, for example, with the image of a caller making the call, a document, video, or graphical data pertinent to the call. Unlike the voice packets, the display packets are transmitted directly to the PC 32 over the IP network 52. The browser 42 or other display software within the PC receives the display packets and displays them on the monitor 40 according to conventional methods.

According to one embodiment of the invention, the PC 32 maintains its own IP address and port number as well as the IP address and port number of the telephone 34 that is to receive the voice data. This information may be collected and stored in one or more tables or files in the PC's memory (not shown), for example, when a user initially logs onto the PC 32. The port and address information is then provided to calling client during the SIP signaling process to ensure that display data is transmitted to the PC 32 and voice data is transmitted to the telephone 34.

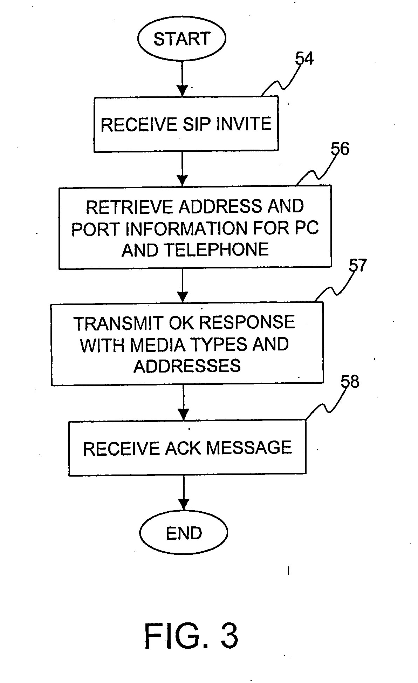

FIG. 3 is an SIP signaling process engaged by the PC 32 to establish an SIP multimedia session with a calling client according to the embodiment illustrated in FIG. 2. The process starts, and in step 54, the PC 32 receives an SIP INVITE message requesting the called client to join a particular conference or establish a two-party conversation as set forth in RFC 2543. In step 56, the PC 32 searches its internal tables or files for the address and port information of the PC as well as the address and port of the associated telephone 34.

In step 57, the PC transmits an SIP OK response via the SIP signaling stack 44 indicating that the called client agrees to participate in the call. Preferably, the OK response includes a session description transmitted in the body of the OK response. The session description preferably enumerates the media types, formats, and addresses that the called client is willing to receive during the session. In order for display data to be delivered to the PC 32 and voice data to the telephone 34, the PC transmits in the session description the IP address and port of the PC 32 as the recipient of the display data, and the IP address and port of the telephone as the recipient of voice. In step 58, the PC 32 receives an SIP ACK message from the called client confirming that the called client has received the OK response. The voice conversation thus proceeds via the telephone 34 while any display data is viewed through the PC 32.

A person skilled in the art should recognize that a similar signaling process may occur when the PC 32 initiates the call. In this scenario, the session -description is transmitted by the PC 32 in the body of an SIP INVITE message to a called client.

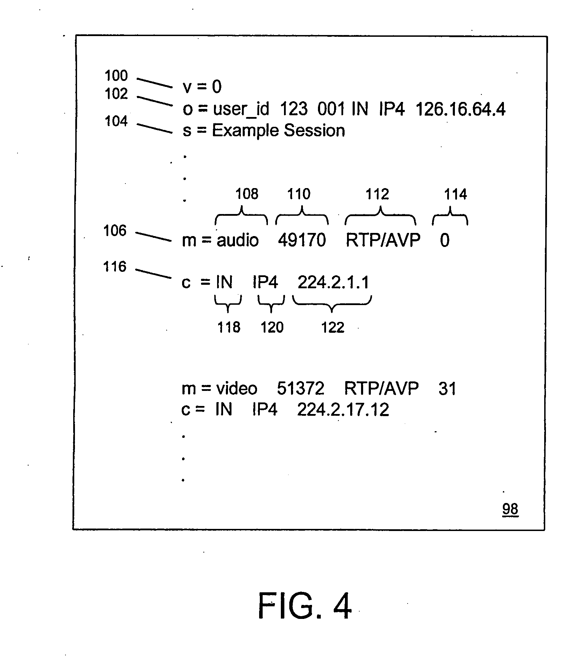

FIG. 4 is an exemplary session description 98 transmitted in the body of an SIP INVITE or OK message. The session description 98 preferably adheres to a session description protocol (SDP) set forth in Network Working Group Request for Comments 2327 entitled "SDP: Session Description Protocol," April 1998 (hereinafter referred to as RFC 2327), the content of which is incorporated herein by reference.

The session description 98 preferably includes a protocol version 100 indicating a version number of the SDP being used. The session description 98 further preferably includes a session originator 102 information and a session name 104. The session originator 102 provides information on the originator of the session, such as, for example, a username, session identifier, session version number, originator's network type, originator's address type, and the originator's IP address. The session name 104 provides a title identifying the session.

A session description 98 preferably also includes a media description 106 providing information on the type and format of the media that the user is willing to receive. A session description may contain multiple media descriptions.

Each media description 106 preferably includes a media type 108 indicating whether the media to be received is audio, display data, application data, or the like. The media description further includes a transport port 110 and a transport protocol 112 associated with the media stream that is to be received. If the media type is audio, the PC 32 provides the transport port 110 and transport protocol 114 associated with the telephone 34 to cause voice data to be received by the telephone. However, if the media type is display data, the PC 32 provides its own transport port 110 and transport protocol 114 to cause display data to be received by its browser 42. The media description 106 also includes one or more media format fields 114 describing the format of the media to be received by the user.

Each media description 106 is preferably associated with connection data 116 that provides information about the connection used to receive the indicated type of media. The connection data 116 preferably includes a network type 118, such as, for example, the Internet. The connection data 116 also includes an address type 120 and an IP address 122 that is to receive the indicated media type. The PC 32 preferably provides the IP address of the telephone 34 if the media type is audio. However, if the media type is display data, the PC provides its own IP address.

According to the embodiment illustrated in FIG. 2, all SIP signaling functions are preferably carried out by the PC 32 while the PBX 36 performs all media translations. However, the PC may not be able to perform the signaling functions if it is not operational. It is desirable, however, for calls to be nonetheless placed and received even if the PC 32 is not operational. In this scenario, although the display data associated with the call may not be seen, voice should still be communicated to the participants.

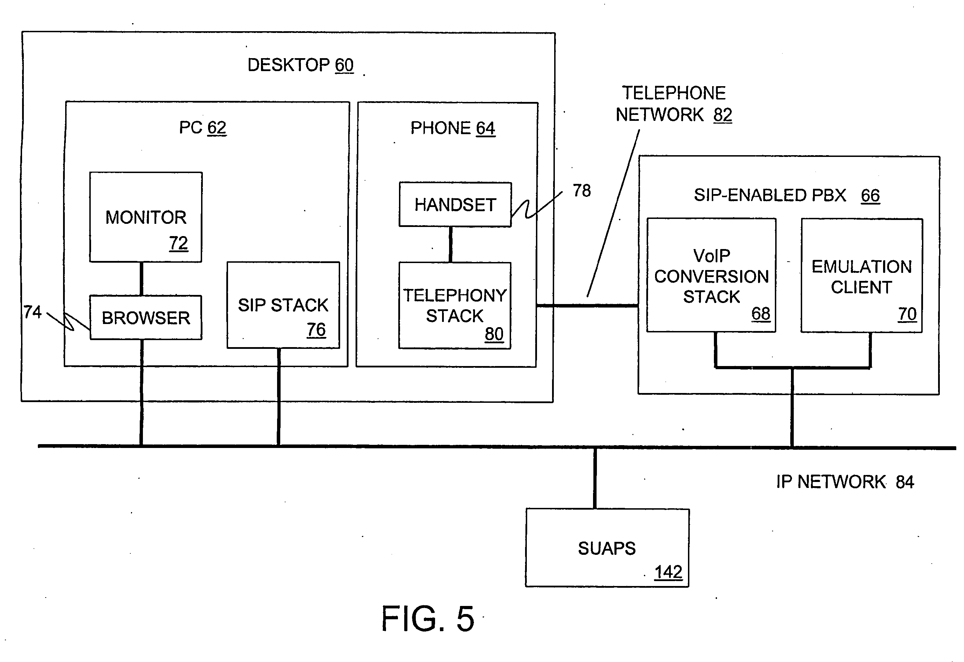

FIG. 5 is a schematic block diagram of a system allowing multimedia SIP sessions to be conducted even in the event of a PC crash according to one embodiment of the invention. The system preferably includes a desktop 60 supporting at least a PC 62 and a telephone 64. The PC 62 preferably receives and transmits display data over an IP network 84. The PC 62 preferably includes a display monitor 72, browser software 74, and an SIP stack 76, which may be similar to the display monitor 40, browser software 42, and SIP stack 44 of FIG. 2.

The telephone 64 preferably communicates with an SIP-enabled PBX unit 66 over a telephone network 82. The telephone 64 preferably includes a handset 78 and telephone protocol stack 80, which may also be similar to the handset 46 and telephone protocol stack 48 of FIG. 2.

The SIP-enabled PBX unit 66 preferably includes an emulation client (also referred to as an SIP user agent) 70 for performing SIP signaling functions in the event that the PC 62 is not operational. The SIP-enabled PBX unit preferably further includes a VoIP conversion stack 68 for converting voice packets received over the IP network 84 into speech according to conventional methods. In an alternative embodiment, the SIP-enabled PBX unit 66 may be replaced with an IP-enabled telephone switch located within the public telephone network 50. The IP-enabling may occur through the use of a VoIP gateway interconnected to a standard public telephone switch (eg, a Class 5 switch) through suitable digital trunks.

Preferably, SIP call signaling operations for establishing an SIP multimedia session are conducted by the PC 62 via the SIP signaling stack 76 if the PC is operational. However, if the PC 62 is not operational, the SIP signaling operations are delegated to the emulation client 70 residing in the SIP-enabled PBX 66. In this instance, the PBX performs media translations as well as SIP call-signaling operations, allowing the system to continue to receive and transmit SIP calls even if associated display data may not be viewed through the PC.

According to one-embodiment of the invention, the system illustrated in FIG. 5 includes an enhanced SIP server referred to as an SIP split user agent proxy server (SUAPS) 142 for transferring control of SIP call-signaling operations between the PC 62 and the SIP-enabled PBX 66. The SUAPS 142 may take the form of a proxy that provides call forwarding functions from one location to another. The SUAPS 142, however, preferably includes an enhanced functionality for automatically forwarding a call from one endpoint device to another based on the state of the endpoint device. Although in the illustrated embodiment the endpoint device is either the PC 62 or the SIP-enabled PBX 66, a person skilled in the art should recognize that the SIP split user agent proxy server 142 may forward calls to any other endpoint device in the system.

According to one embodiment of the invention, the SUAPS 142 determines the state of the PC 62 through an SIP heartbeat mechanism. In this regard, the SUAPS 142 periodically transmits an SIP signal to the PC 62, and the PC responds to the signal with a heartbeat acknowledgement. The SIP signal transmitted to the PC may be, for instance, an SIP INFO command or any other conventional SIP message set forth in RFC 2543. If the PC 62 responds to the command, the SUAPS 142 determines that the PC is operational, and passes control of the call signaling to the PC. However, if the PC fails to respond to the command, the SUAPS 142 redirects calls to the SIP-enabled PBX 66.

The SUAPS 142 or an associated location server (not shown) preferably maintains IP addresses of both the PC 62 and PBX 66 for redirecting calls. Upon receipt of an SIP INVITE message directed to the PC 62, the SIP split user agent proxy server 142 directs the call to the PC 62 by preferably using the IP address of the PC as the location of the SIP endpoint if the PC is operational. However, if the PC is not operations, the SUAPS 142 redirects the call to the SIP-enabled PBX 66 by preferably designating the IP address of the PBX as the location of the SIP endpoint.

If the call is redirected to the SIP-enabled PBX 66, the emulation client 70 within the PBX engages in call signaling operations for establishing the SIP session with the calling client. In this regard, the emulation client 70 converts received SIP messages to PBX messages, such as, for example, CSTA, CTI, H.323, or other PBX signaling events as described in further detail in U.S. Patent Application No. 09/781,851. The emulation client 70 further converts PBX messages to SIP messages and transmits them to the SUAPS 142 to establish the session. The emulation client 70 further preferably instructs the VoIP conversion stack 68 via a media gateway control protocol (MGCP) or other similar protocol to perform translations of IP voice packets to speech.

According to an alternative embodiment of the invention, the SUAPS 142 is a back-to-back user agent with logic to forward calls to multiple hosts so that two or more hosts may be associated with the same call. Preferably the SUAPS 142 splits an incoming SIP call signal between the PC 62 and SIP-enabled PBX 66 in a manner that is transparent to both hosts, and engages in SIP signaling with each host individually. The PC 62 and SIP-enabled PBX 66 preferably engage in the SIP signaling in a conventional manner without being aware that the call is being split.

An end user preferably engages in a registration process with the SUAPS 142 in order for the SUAPS to split a call to one or more hosts. Registration may be accomplished via standard SIP REGISTER messages or via a private registration process established by the SUAPS. During the registration process, the SUAPS obtains the IP addresses of the various hosts accessible by the user, and stores it in an internal or external database.

When the SUAPS receives an incoming SIP call, the server determines if the PC has been registered. If the PC 62 has been registered, the SUAPS 142 splits the call and transmits call signals associated with the display data to the PC if it is operational, and call signals associated with voice to the SIP-enabled PBX 66. If the PC 62 has not been registered, the entire call is transmitted to the SIP-enabled PBX, and no splitting occurs between the display and voice data.

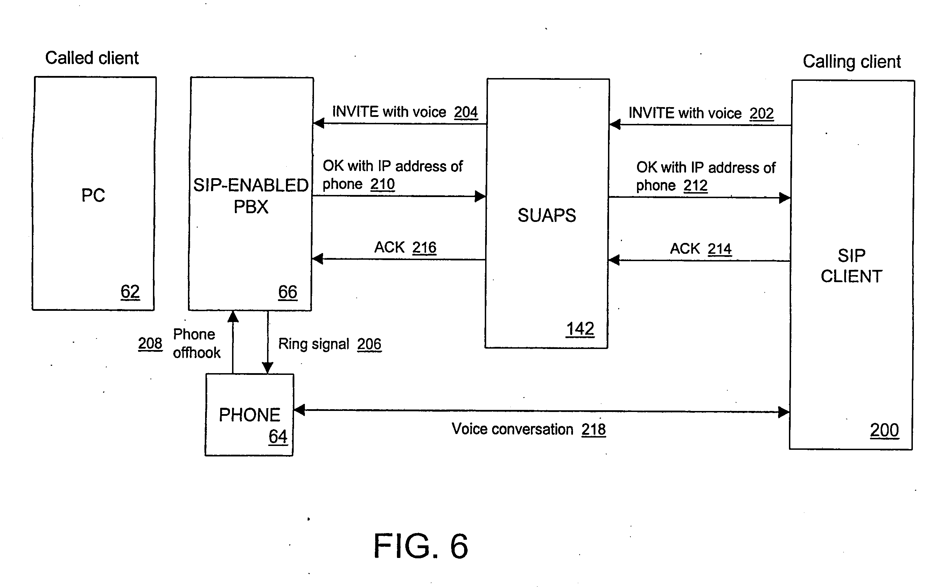

FIG. 6 is a functional block diagram of SIP signals received and transmitted by the SUAPS 142 in the event that the incoming call is a voice-only call with no associated display data according to one embodiment of the invention. In step 202, an SIP client software 200 residing with a calling client transmits to the SUAPS 142 an INVITE message containing the caller's VoIP parameters including an IP address and port number for voice transmissions. The SUAPS 142 preferably examines the body of the INVITE message and finds only an SDP body for audio. Accordingly, the SUAPS determines that the call is a voice-only call.

The SUAPS forwards in step 204 the received INVITE message to the SIP-enabled PBX 66. The SIP-enabled PBX 66 receives the INVITE message, determines/allocates the IP address/port of the called user, and initiates an SIP call to the telephone 64 in step 206 by preferably transmitting a ringing signal. Upon answer by the called user, the SIP-enabled PBX 66 detects in step 208 that the telephone has gone off hook. Accordingly, in step 210, the SIP-enabled PBX transmits to the SUAPS an OK message with the IP address corresponding to the telephone 64. In step 212, the SUAPS 142 forwards the OK message with the telephone's IP address to the calling SIP client 200, and the SIP client responds in step 214 with an ACK message which is forwarded to the SIP-enabled PBX in step 216. Two-way voice conversation between the telephone 64 and the calling client 200 ensues in step 218.

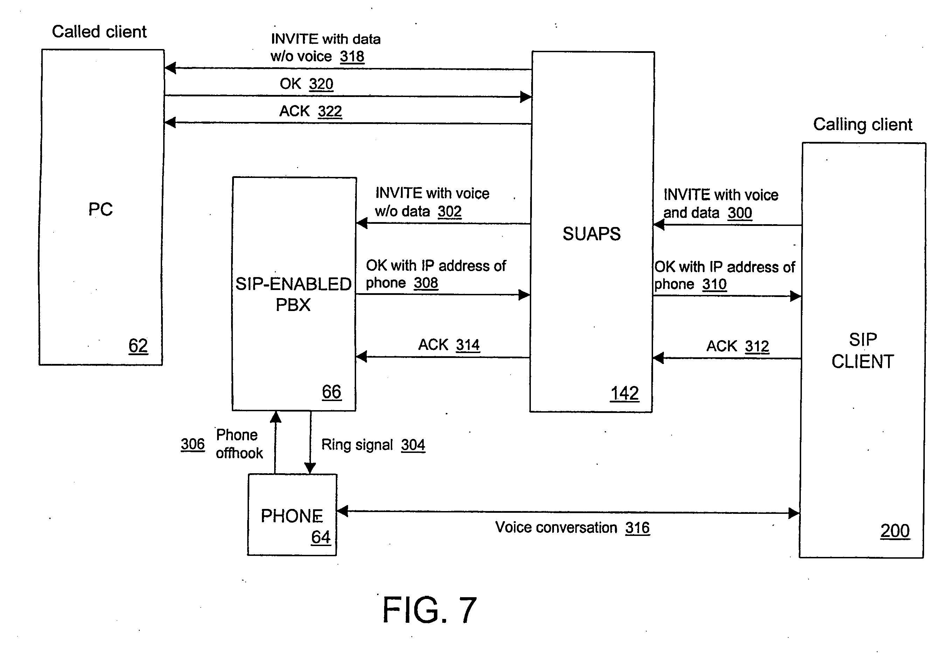

FIG. 7 is a functional block diagram of SIP signals received and transmitted by the SUAPS 142 in the event that the incoming call contains both voice and non-video display data according to one embodiment of the invention. In step 300, the calling SIP client software 200 transmits to the SUAPS 142 an INVITE message containing the caller's VoIP parameters as well as the actual display data or a link to such display data. For instance, the display data may be represented in standard MIME format within the body of the INVITE message, or may alternatively be an HTML pointer to a document on a remote server.

The SUAPS 142 determines that the call includes both voice and display data upon locating an SDP body for audio as well as for display. In step 302, the SUAPS 142 modifies the header of the received INVITE message so that it contains only the voice information, and forwards the modified INVITE message with voice-only data to the SIP-enabled PBX 66. The display data is preferably stored in a temporary cache.

The SIP-enabled PBX 66 receives the INVITE message, determines/allocates the IP address/port of the called user, and initiates an SIP call to the telephone 64 by preferably transmitting a ringing signal in step 304. Upon answer by the called user, the SIP-enabled PBX 66 detects in step 306 that the telephone has gone off hook. Accordingly, in step 308, the SIP-enabled PBX transmits to the SUAPS an OK message with the IP address corresponding to the telephone 64. In step 310, the SUAPS 142 forwards the OK message with the telephone's IP address to the calling SIP client 200, and the SIP client responds in step 312 with an ACK message which is forwarded to the SIP-enabled PBX in step 314. Two-way voice conversation between the telephone 64 and the calling client then ensues in step 316.

In step 318, preferably immediately after receipt of the ACK message from the calling SIP client 200, the SUAPS 142 issues a second INVITE message with the cached display data to the PC 62 without the voice information. The user of the PC is preferably alerted via an audio and/or a visual notifier that an incoming INVITE message has been received, and upon answering the call, the PC transmits an OK message in step 320, and the SUAPS 142 responds with an ACK message in step 322. The display data is then delivered to the PC. The voice conversation thus proceeds via the telephone 64 while the display data is viewed on the PC 62. In an alternative embodiment, the PC includes an automatic answer mode that is conventional in the art to allow the automatic receipt of the display data without affirmative action by the user.

If the PC 62 is not operational, the PC 62 does not respond to the second INVITE message with an OK message. The voice conversation, however, continues. Upon failure of the SUAPS 142 to receive the OK message from the PC 62, the SUAPS 142 preferably e-mails the cached display data to the user. Thus, although the display data may not be immediately available during the call, the data may later be retrieved for reference when the PC becomes operational.

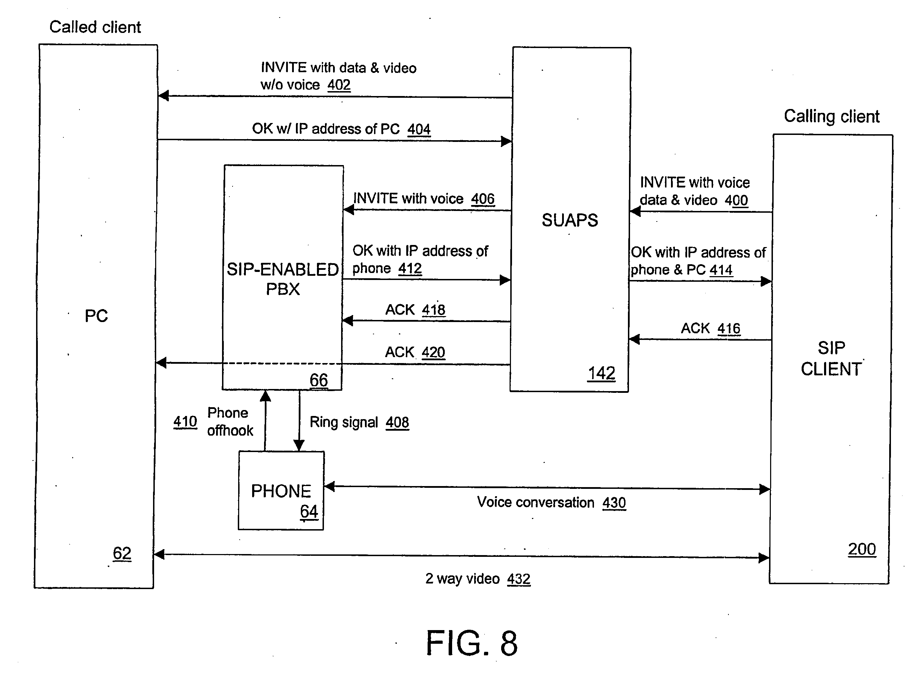

FIG. 8 is a functional block diagram of SIP signals received and transmitted by the SUAPS 142 in the event that the incoming call contains both voice, non-video display data, and video information according to one embodiment of the invention. In step 400, the calling SIP client software 200 transmits to the SUAPS 142 an INVITE message containing the caller's VoIP parameters, non-video display data, and video information including video compression and decompression capabilities, and the caller's IP address and port information. The SUAPS 142 determines that the call contains voice, data, and video, and unlike the scenario where only voice and display data are included, the SUAPS 142 preferably issues an SIP INVITE message to the PC prior to issuing an INVITE message to the SIP-enabled PBX 66. Accordingly, in step 402, the SUAPS 142 issues the INVITE message to the PC 62. The INVITE message preferably contains only the display data and the video information. The caller's VoIP parameters included in the initial INVITE message is preferably stored in a temporary cache by the SUAPS 142.

If the PC is functional, it preferably transmits an OK response in step 404. The OK response preferably includes the IP address and port information associated with the PC 62, allowing the calling client to communicate the actual, real-time compressed video information to the PC. Upon receipt of the OK response by the SUAPS 142, the server, in step 406, issues a second INVITE message including the VoIP parameters to the SIP-enabled PBX. The SIP-enabled PBX 66 receives the INVITE message, determines/allocates the IP address/port of the called user, and initiates an SIP call to the telephone 64 by preferably transmitting a ringing signal in step 408. Upon answer by the called user, the SIP-enabled PBX 66 detects in step 410 that the telephone has gone off hook. Accordingly, in step 412, the SIP-enabled PBX transmits to the SUAPS an OK message with the IP address corresponding to the telephone 64, allowing voice data to be delivered to the telephone 64 via the SIP-enabled PBX 66. In step 414, the SUAPS 142 forwards the OK message with the telephone's IP address and the PC's IP address allowing voice data to be transmitted to the telephone 64 and video data to the PC 62.

In step 416, the SIP client 200 responds with an ACK message which the SUAPS 142 forwards to both the SIP-enabled PBX in step 418, and the PC 62 in step 420. Voice conversation then ensues in step 430 between the calling client and the telephone 64 while video travels to/from the PC 62. The non-video display data is also viewed using the PC.

If, however, the PC 62 is not operational, only voice communication ensues. No video is exchanged between the PC and the calling client. The non-video display data, however, is e-mailed to the user for retrieval at a later time when the PC becomes operational.

Although FIGS. 6-8 illustrate call signaling when the SUAPS 142 receives inbound calls, a person skilled in the art should recognize that the SUAPS 142 may also process outbound calls in a similar manner.

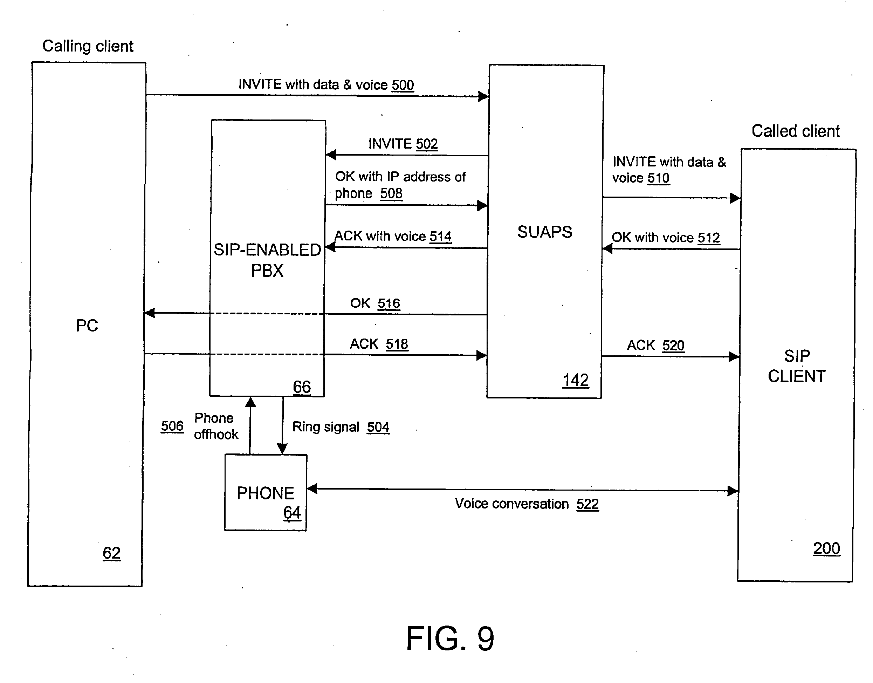

FIG. 9 is one exemplary illustration of the processing of outbound calls containing both voice and non-video display data according to one embodiment of the invention. In step 500, the PC 62 transmits to the SUAPS 142 an INVITE message containing the IP address and port information of the PC for the voice conversation. The SUAPS 142 receives the INVITE message and in turn, issues another INVITE message to the SIP-enabled PBX in step 502. However, the IP address and port information received from the PC is not transmitted to the PBX in the INVITE message. Rather, the SUAPS 142 stores the IP address and port information in a temporary cache.

The SIP-enabled PBX 66 receives the INVITE message and initiates an SIP call to the telephone 64 by preferably transmitting a ringing signal in step 504. Upon answer in step 506, the SIP-enabled PBX 66 detects that the telephone has gone off hook. Accordingly, in step 508, the SIP-enabled PBX transmits to the SUAPS 142 an OK message with the IP address corresponding to the telephone 64.

Upon receipt of the OK message, the SUAPS 142 in step 510 transmits an INVITE message to the called SIP client 200 with the VoIP parameters of the telephone 64 as well as the actual display data or a link to such display data. In step 512, the SIP client 200 responds with an OK message including its own VoIP parameters. In step 514, the SUAPS 142 receives the OK message and transmits an ACK message to the SIP-enabled PBX 66 with the called SIP client's VoIP parameters. In step 516, the SUAPS further transmits an OK message to the PC and receives an ACK message in step 518. Upon receipt of the ACK message from the PC, the SIP server transmits an ACK message to the called SIP client in step 520 and voice conversation ensues in step 522.

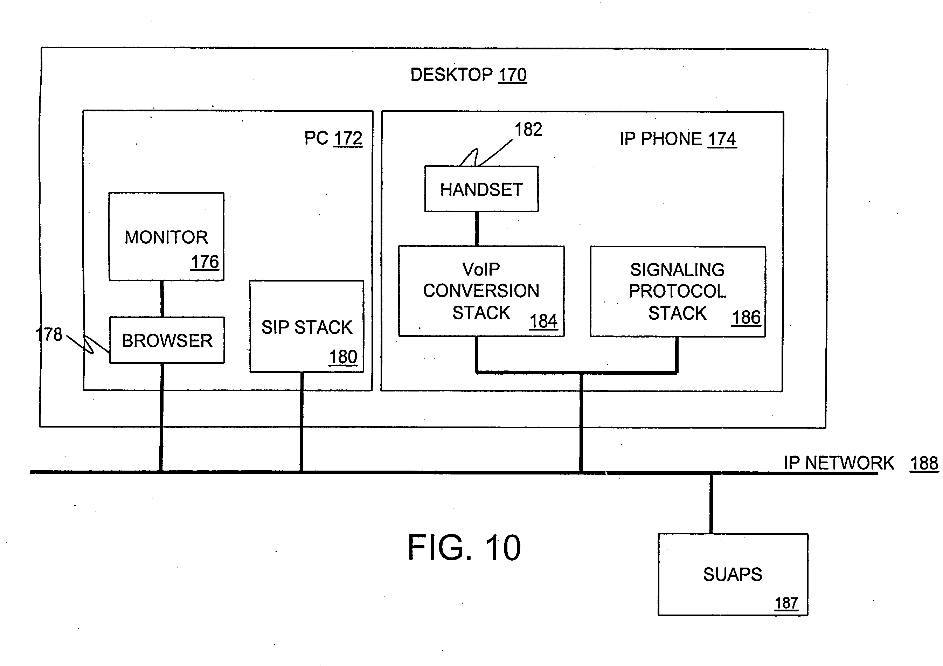

FIG. 10 is a schematic block diagram of a system for conducting multimedia SIP sessions via multiple hosts according to another embodiment of the invention. The system preferably includes a desktop 170 supporting a PC 172 and an IP phone 174. The PC 172 receives and transmits data over an IP network 188. The PC 172 preferably includes a display monitor 176, browser and SIP stack 180 which may be similar to the display monitor 40, browser 42, and SIP stack 44 of FIG. 2.

The IP phone 174 is preferably a telephone or appliance configured for IP telephony communication according to conventional methods. The IP phone 174 preferably includes a handset 182 and VoIP conversion stack 184 that may be similar to the handset and 46 and VoIP conversion stack 68 of FIG. 2. The IP phone 174 further includes a signaling protocol stack 186 for creating, modifying, and terminating multimedia sessions over the IP network 188. The signaling protocol stack 186 includes but is not limited to the SIP protocol, H.323 protocol, or the like.

Preferably, call signaling and display of data associated with a call is conducted by the PC 172 if the PC is operational. The IP phone 174 preferably performs media translations via the VoIP conversion stack 184 for providing voice data to a user through the handset 182. If the signaling protocol stack 186 is an SIP signaling protocol stack, the IP phone 174 may further provide backup to the PC 172 for call signaling in the event that the PC is not operational. The transfer of call signaling control between the PC and IP phone may be handled by an SUAPS 187 which may be similar to the SUAPS 142 of FIG. 5.

Although this invention has been described in certain specific embodiments, those skilled in the art will have no difficulty devising variations. For example, a person skilled in the art should recognize that the present invention is not limited to SIP signaling, but may extend to other signaling protocols known in the art, such as, for example, the H.323 protocol.

In addition, although the embodiments have been described in terms of the SUAPS 142 splitting voice and display data during the call setup phase, a person skilled in the art should recognize that the splitting may also occur during the call proceeding phases. For example, a user may want to redirect video data to a monitor in a conference room, or during a voice call, the user may want to being transmitting video.

The present invention may also extend to allow collaborative desktop sharing and whiteboarding. In addition to the PC being used for exchanging display data, whiteboarding technology conventional in the art may be incorporated to the SUAPS 142 to allow called users to jointly view and modify documents.

Furthermore, the embodiments have been described in terms of the SUAPS 142 splitting voice and display data to two hosts, a person skilled in the art should recognize that a call may be split to multiple hosts. For instance, an incoming SIP call may be split into multiple INVITEs to devices having specific desirable properties. For example, video may travel to a projector, data to a PC, and whiteboard session information to an electronic whiteboard.

## Claims

1. A multihost system for communicating information to a participant in a session initiation protocol (SIP) multimedia session, comprising:
- a first host (62) having an SIP signaling stack and a first interface for communicating to the participant information of a first media type transmitted in the SIP session; and
- a second host (64) coupled to the first host (62) and having a second interface for communicating to the participant information of a second media type transmitted in the SIP session;
wherein the second host is a telephone;
**characterized by**
- a voice switching unit (66) coupled to the second host (64), the voice switching unit (66) including an emulation client (70) for emulating SIP signaling functions for establishing the SIP session if the first host (62) is not operational

2. The system of claim 1, wherein the first host is a personal computer.

3. The system of claim 1, wherein the first host is adapted to engage in SIP signaling with a calling client for establishing the SIP session and to transmit SIP signaling parameters to the calling client indicating that the first host is to receive the information of the first media type and the second host is to receive the information of the second media type.

4. The system of claim 1 further including a server coupled to the first host and the second host, the server being adapted to receive an incoming SIP call and to automatically forward the call to the emulation client for establishing the SIP session if the first host is not operational.

5. The system of claim 1 wherein the first media type is video.

6. The system of claim 1, wherein the first media type is data.

7. The system of claim 1, wherein the second media type is voice.

8. The system of claim 1 further including a server coupled to the first host and the second host, **characterized in that** the server is adapted to receive an incoming SIP call from a calling client and, if the first host is operational, to transmit call signals associated with the first media type to the first host for allowing the first host to receive information of a first media type during the SIP session and to transmit call signals associated with the second media type to the second host for allowing the second host to receive information of the second media type during the SIP session.

9. The system of claim 8, wherein the first media type is data and the server is adapted to transmit the data via electronic mail if the first host is not operational during the SIP session.

10. The system of claim 8, wherein the call signals associated with the first media type includes a network address of the calling client transmitting the information of the first media type.

11. The system of claim 8, wherein the call signals associated with the second media type includes a network address of the calling client transmitting the information of the second media type.

12. The system of claim 8, wherein the call signals associated with the second media type includes the information of the second media type to be transmitted to a session participant.

13. A method in a multihost system for communicating information to a participant in a session initiation protocol (SIP) multimedia session, the multihost system comprising a first host (62) having an SIP signalling stack (76), a second host (64) coupled to the first host (62), and a voice switching unit (66) coupled to the second host (64), the voice switching unit (66) including an emulation client (70), the method comprising a step of:
- receiving an incoming SIP call from a calling client, the incoming SIP call including information of a first media type and information of a second media type;
wherein the second host is a telephone;
**characterized by**
- emulating SIP signaling functions at the emulation client (70) for establishing the SIP session if the first host (62) is not operational.

14. The method of claim 13, wherein the first host is a personal computer.

15. The method of claim 13 wherein the first media type is video.

16. The method of claim 13 wherein the first media type is data.

17. The method of claim 16, wherein a server transmits the data via electronic mail if the first host is not operational during the SIP session.

18. The method of claim 13 wherein the second media type is voice.

19. The method of claim 13 further comprising the steps of:
- engaging in SIP signaling with the calling client for establishing the SIP session; and
- transmitting SIP signaling parameters to the calling client indicating that the first host is to receive the information of the first media type and the second host is to receive the information of the second media type.

20. The method of claim 13 further comprising the step of engaging, if the first host is operational, in SIP signaling with the first host for transmitting to the first host SIP signaling parameters associated with the first media type.

21. The method of claim 20, wherein the SIP signaling parameter associated with the first media type includes a network address of the calling client transmitting the information of the first media type.

22. The method of claim 13 further comprising the step of engaging in SIP signaling with a voice switching unit coupled to the second host for transmitting to the voice switching unit SIP signaling parameters associated with the second media type.

23. The method of claim 22, wherein the SIP signaling parameter associated with the second media type includes a network address of the calling client transmitting the information of the second media type.

24. The method of claim 22, wherein the SIP signaling parameter associated with the second media type includes the information of the second media type to be transmitted to the session participant.

## Patentansprüche

1. Mehrfach-Host-System zur Übermittlung von Informationen an einen Teilnehmer einer Multimedia-Sitzung unter einem Sitzungseinleitungsprotokoll (SIP), umfassend:
- einen ersten Host (62) mit einem SIP-Signalisierungs-Stack und einer ersten Schnittstelle zur Übermittlung von Informationen über einen ersten in der SIP-Sitzung übertragenen Medientyp an den Teilnehmer; und
- einen zweiten Host (64), welcher an den ersten Host (62) gekoppelt ist, mit einer zweiten Schnittstelle zur Übermittlung von Informationen über einen zweiten in der SIP-Sitzung übertragenen Medientyp an den Teilnehmer, wobei der zweite Host ein Telefon ist;
**gekennzeichnet durch**
- eine Sprachvermittlungseinheit (66), welche an den zweiten Host (64) gekoppelt ist, wobei die Sprachvermittlungseinheit (66) einen Emulations-Client (70) für die Emulation von SIP-Signalisierungsfunktionen zum Aufbauen der SIP-Sitzung, wenn der erste Host (62) nicht betriebsfähig ist, umfasst.

2. System nach Anspruch 1, wobei der erste Host ein Personal Computer ist.

3. System nach Anspruch 1, wobei der erste Host dazu ausgelegt ist, eine SIP-Signalisierung mit einem anrufenden Client einzuleiten, um die SIP-Sitzung auszubauen und SIP-Signalisierungsparameter, welche angeben, dass der erste Host die Informationen über den ersten Medientyp empfanden soll und der zweite Host die Informationen über den zweiten Medientyp empfangen soll, an den anrufenden Client zu übertragen.

4. System nach Anspruch 1, weiterhin umfassend einen an den ersten Host und an den zweiten Host gekoppelten Server, wobei der Server dazu ausgelegt ist, einen eingehenden SIP-Anruf zu empfangen und den Anruf automatisch an den Emulations-Client weiterzuleiten, um die SIP-Sitzung aufzubauen, wenn der erste Host nicht betriebsfähig ist.

5. System nach Anspruch 1, wobei es sich bei dem ersten Medientyp um ein Video handelt.

6. System nach Anspruch 1, wobei es sich bei dem ersten Medientyp um Daten handelt.

7. System nach Anspruch 1, wobei es sich bei dem zweiten Medientyp um Sprache handelt.

8. System nach Anspruch 1, weiterhin umfassend einen an den ersten Host und an den zweiten Host gekoppelten Server, dadurch gekennzeichet, dass der Server dazu ausgelegt ist, einen eingehenden SIP-Anruf von einem anrufenden Client zu empfanden und, wenn der erste Host betriebsfähig ist, mit dem ersten Medientyp assoziierte Anrufsignale an den ersten Host zu übertragen, um es dem ersten Host zu ermöglichen, Informationen über einen ersten Medientyp während der SIP-Sitzung zu empfanden, und mit dem zweiten Medientyp assoziierte Anrufsignale an den zweiten Host zu übertragen, um es dem zweiten Host zu ermöglichen, Informationen über den zweiten Medientyp während der SIP-Sitzung zu empfanden.

9. System nach Anspruch 8, wobei es sich bei dem ersten Medientyp um Daten handelt und der Server dazu ausgelegt ist, die Daten per elektronische Post zu übertragen, wenn der erste Host während der SIP-Sitzung nicht betriebsfähig ist.

10. System nach Anspruch 8, wobei die mit dem ersten Medientyp assoziierten Anrufsignale eine Netzwerkadresse des anrufenden Clients, welcher die Informationen über den ersten Medientyp überträgt, umfassen.

11. System nach Anspruch 8, wobei die mit dem zweiten Medientyp assoziierten Anrufsignale eine Netzwerkadresse des anrufenden Clients, welcher die Informationen über den zweiten Medientyp überträgt, umfassen.

12. System nach Anspruch 8, wobei die mit dem zweiten Medientyp assoziierten Anrufsignale die an einen Sitzungsteilnehmer zu übertragenden Informationen über den zweiten Medientyp umfassen.

13. Verfahren in einem Mehrfach-Host-System zur Übermittlung von Informationen an einen Teilnehmer einer Multimedia-Sitzung unter einem Sitzungseinleitungsprotokoll (SIP), wobei das Mehrfach-Host-System einen ersten Host (62) mit einem SIP-Signalisierungs-Stack (76), einen zweiten Host (64), welcher an den ersten Host (62) gekoppelt ist, und eine Sprachvermittlungseinheit (66) umfasst, welche an den zweiten Host gekoppelt ist, wobei die Sprachvermittlungseinheit einen Emulations-Client (70) umfasst, wobei das Verfahren einen Schritt des
- Empfangens eines eingehenden SIP-Anrufs von einem anrufenden Client umfasst, wobei der eingehende SIP-Anruf Informationen über einen ersten Medientyp und Informationen über einen zweiten Medientyp umfasst,
wobei der zweite Host ein Telefon ist;
**gekennzeichnet durch**
- das Emulieren von SIP-Signalisierungsfunktionen an dem Emulations-Client (70) zum Aufbauen der SIP-Sitzung, wenn der erste Host (62) nicht betriebsfähig ist.

14. Verfahren nach Anspruch 13, wobei der erste Host ein Personal Computer ist.

15. Verfahren nach Anspruch 13, wobei es sich bei dem ersten Medientyp um ein Video handelt.

16. Verfahren nach Anspruch 13, wobei es sich bei dem ersten Medientyp um Daten handelt.

17. Verfahren nach Anspruch 16, wobei ein Server die Daten per elektronische Post überträgt, wenn der erste Host während der SIP-Sitzung nicht betriebsfähig ist.

18. Verfahren nach Anspruch 13, wobei es sich bei dem zweiten Medientyp um Sprache handelt.

19. Verfahren nach Anspruch 13, weiterhin die folgenden Schritte umfassend:
- Einleiten einer SIP-Signalisierung mit dem anrufenden Client zum Aufbauen der SIP-Sitzung; und
- Übertragen von SIP-Signalisierungsparametern, welche angeben, dass der erste Host die Informationen über den ersten Medientyp empfanden soll und der zweite Host die Informationen über den zweiten Medientyp empfanden soll, an den anrufenden Client.

20. Verfahren nach Anspruch 13, weiterhin umfassend den Schritt des Einleitens, wenn der erste Host betriebsfähig ist, einer SIP-Signalisierung mit dem ersten Host zum Übertragen von mit dem ersten Medientyp assoziierten SIP-Signalisierungsparametern an den ersten Host.

21. Verfahren nach Anspruch 20, wobei der mit dem ersten Medientyp assoziierte SIP-Signalisierungsparameter eine Netzwerkadresse des anrufenden Clients, welcher die Informationen über den ersten Medientyp überträgt, umfasst.

22. Verfahren nach Anspruch 13, weiterhin umfassend den Schritt des Einleitens einer SIP-Signalisierung mit einer an den zweiten Host gekoppelten Sprachvermittlungseinheit zum Übertragen von mit dem zweiten Medientyp assoziierten SIP-Signalisierungsparametern an die Sprachvermittlungseinheit.

23. Verfahren nach Anspruch 22, wobei der mit dem zweiten Medientyp assoziierte SIP-Signalisierungsparameter eine Netzwerkadresse des anrufenden Clients, welcher die Informationen über den zweiten Medientyp überträgt, umfasst.

24. Verfahren nach Anspruch 22, wobei der mit dem zweiten Medientyp assoziierte SI P-Signalisierungsparameter die an den Sitzungsteilnehmer zu übertragenden Informationen über den zweiten Medientyp umfasst.

## Revendications

1. Système à plusieurs hôtes pour communiquer des informations à un participant dans une session multimédia de protocole d'initiation de session (SIP), comprenant :
- un premier hôte (62) présentant une pile de signalisation SIP et une première interface pour communiquer au participant des informations d'un premier type de support transmises dans la session SIP ; et
- un deuxième hôte (64) couplé au premier hôte (62) et présentant une deuxième interface pour communiquer au participant des informations d'un deuxième type de support transmises dans la session SIP ; dans lequel le deuxième hôte est un téléphone i **caractérisé par**
- une unité de commutation vocale (66) couplée au deuxième hôte (64), l'unité de commutation vocale (66) comprenant un client d'émulation (70) pour émuler des fonctions de signalisation SIP pour établir la session STP si le premier hôte (62) n'est pas opérationnel.

2. Système selon la revendication 1, dans lequel le premier hôte est un ordinateur personnel.

3. Système selon la revendication 1, dans lequel le premier hôte est adapté pour s'engager dans la signalisation SIP avec un client appelant pour établir la session SIP et pour transmettre des paramètres de signalisation SIP au client appelant indiquant que le premier hôte doit recevoir les informations du premier type de support et le deuxième hôte doit recevoir les informations du deuxième type de support.

4. Système selon la revendication 1 comprenant en outre un serveur couplé au premier hôte et au deuxième hôte, le serveur étant adapté pour recevoir un appel SIP entrant et pour transférer automatiquement l'appel vers le client d'émulation pour établir la session SIP si le premier hôte n'est pas opérationnel.

5. Système selon la revendication 1, dans lequel le premier type de support est une vidéo.

6. Système selon la revendication 1, dans lequel le premier type de support est des données.

7. Système selon la revendication 1, dans lequel le deuxième type de support est une voix.

8. Système selon la revendication 1 comprenant en outre un serveur couplé au premier hôte et au deuxième hôte, **caractérisé en ce que** le serveur est adapté pour recevoir un appel SIP entrant provenant d'un client appelant et, si le premier hôte est opérationnel, pour transmettre des signaux d'appel, associés au premier type de support, au premier hôte pour permettre au premier hôte de recevoir des informations d'un premier type de support durant la session SIP et pour transmettre des signaux d'appel, associés au deuxième type de support, au deuxième hôte pour permettre au deuxième hôte de recevoir des informations du deuxième type de support durant la session SIP.

9. Système selon la revendication 8, dans lequel le premier type de support est des données et le serveur est adapté pour transmettre les données par courrier électronique si le premier hôte n'est pas opérationnel durant la session SIP.

10. Système selon la revendication 8, dans lequel les signaux d'appel associés au premier type de support comprennent une adresse de réseau du client appelant transmettant les informations du premier type de support.

11. Système selon la revendication 8, dans lequel les signaux d'appel associés au deuxième type de support comprennent une adresse de réseau du client appelant transmettant les informations du deuxième type de support.

12. Système selon la revendication 8, dans lequel les signaux d'appel associés au deuxième type de support comprennent les informations du deuxième type de support à transmettre à un participant à la session.

13. Procédé dans un système à plusieurs hôtes pour communiquer des informations à un participant dans une session multimédia de protocole d'initiation de session (SIP), le système à plusieurs hôtes comprenant un premier hôte (62) présentant une pile de signalisation SIP (76), un deuxième hôte (64) couplé au premier hôte (62), et une unité de commutation vocale (66) couplée au deuxième hôte (64), l'unité de commutation vocale (66) comprenant un client d'émulation (70), le procédé comprenant l'étape suivante :
- recevoir un appel SIP entrant provenant d'un client appelant, l'appel SIP entrant comprenant des informations d'un premier type de support et des informations d'un deuxième type de support ; dans lequel le deuxième hôte est un téléphone i **caractérisé par l'étape suivante**
- émuler des fonctions de signalisation SIP au niveau du client d'émulation (70) pour établir la session SIP si le premier hôte (62) n'est pas opérationnel.

14. Procédé selon la revendication 13, dans lequel le premier hôte est un ordinateur personnel.

15. Procédé selon la revendication 13, dans lequel le premier type de support est une vidéo.

16. Procédé selon la revendication 13, dans lequel le premier type de support est des données.

17. Procédé selon la revendication 16, dans lequel un serveur transmet les données par courrier électronique si le premier hôte n'est pas opérationnel durant la session SIP.

18. Procédé selon la revendication 13 dans lequel le deuxième type de support est une voix.

19. Procédé selon la revendication 13, comprenant en outre les étapes suivantes :
- s'engager dans la signalisation SIP avec le client appelant pour établir la session SIP ; et
- transmettre des paramètres de signalisation SIP au client appelant indiquant que le premier hôte doit recevoir les informations du premier type de support et que le deuxième hôte doit recevoir les informations du deuxième type de support.

20. Procédé selon la revendication 13 comprenant en outre l'étape d'engagement, si le premier hôte est opérationnel, dans la signalisation SIP avec le premier hôte pour transmettre au premier hôte des paramètres de signalisation SIP associés au premier type de support.

21. Procédé selon la revendication 20, dans lequel le paramètre de signalisation SIP associé au premier type de support comprend une adresse de réseau du client appelant transmettant les informations du premier type de support.

22. Procédé selon la revendication 13 comprenant en outre l'étape d'engagement dans la signalisation SIP avec une unité de commutation vocale couplée au deuxième hôte pour transmettre à l'unité de commutation vocale des paramètres de signalisation SIP associés au deuxième type de support.

23. Procédé selon la revendication 22, dans lequel le paramètre de signalisation SIP associé au deuxième type de support comprend une adresse de réseau du client appelant transmettant les informations du deuxième type de support.

24. Procédé selon la revendication 22, dans lequel le paramètre de signalisation SIP associé au deuxième type de support comprend les informations du deuxième type de support à transmettre au participant à la session.
